# EUROPEAN PATENT SPECIFICATION

(11) **EP 1 236 741 B1**
(45) Date of publication and mention of the grant of the patent: **16.08.2006**
(21) Application number: 01104473.2
(22) Date of filing: 28.02.2001
(51) Int. Cl.: C08B 11/20, B01D 61/14

(54) **Process for recovering cellulose ethers from aqueous solutions via enhanced shear ultrafiltration**
Verfahren zum Abtrennen von Celluloseether aus wässrigen Lösungen mittels Ultrafiltration mit verstärkter Sherwirkung
Procédé de séparation d'ethers de cellulose à partir de solutions aqueuses au moyen d'ultrafiltration avec un taux de cisaillement accru

(43) Date of publication of application: 04.09.2002
(73) Proprietor: HERCULES INCORPORATED, Wilmington, Delaware 19894-0001 (US)
(72) Inventor: Kostas, John N., Wilmington, DE 19803 (US)
(74) Representative: HOFFMANN EITLE

(56) References cited:
- EP-A- 1 065 221
- DE-A- 4 134 662
- US-A- 5 360 902
- US-A- 5 500 124
- PATENT ABSTRACTS OF JAPAN vol. 8, no. 130 (C-229), 16 June 1984 (1984-06-16) & JP 59 041303 A (ASAHI KASEI KOGYO KK), 7 March 1984 (1984-03-07)

## Description

This invention relates to a process for recovering cellulose ethers from aqueous solutions, particularly from the washing media obtained in the purification of crude cellulose ethers.

Water soluble cellulose ethers are used in many industrial applications, as for example, water retention aids, thickening agents, protective colloids, suspending agents, binders, and stabilizers. Cellulose ethers are generally prepared by the heterogeneous reaction of purified cellulose with an alkali hydroxide, typically sodium hydroxide, and at least one etherifying agent. Etherifying agents may include alkyl halides, ethylene, propylene or butylene oxides, and monochloro-carboxylic acids (see Encyclopedia of Polymer Science and Engineering, 2^{nd} ed., Vol. 3, pp. 224-269, in particular pp. 229-231). The alkali hydroxide is typically introduced in water, while the etherifying agents are usually introduced in an inert organic solvent. The crude cellulose ether product is then filtered from the reaction mixture using conventional filtration techniques and can either then be dried and ground to prepare a technical grade product, or more typically, further purified through the separation of the cellulose ether from the byproducts of the etherification reaction. These byproducts can include inorganic salts, such as sodium chloride, and the hydrolysis products of the etherifying agents, for example ethylene or propylene glycols.

The separation of the cellulose ether product from the byproducts is usually accomplished by the washing of the crude cellulose ether product with water, although in some cases a mixture of water and a suitable alcohol, such as methanol, ethanol or isopropanol may be used. Cellulose ethers that are not soluble in cold water, such as ethyl cellulose, can be easily purified by washing with cold water. Cellulose ethers that are not soluble in hot water but soluble in cold water, such as methyl, methylhydroxyethyl, methylhydroxypropyl, or hydroxypropyl cellulose, can be separated from the reaction byproducts by washing with hot water or steam at a temperature above the gel or flocculation temperature (the temperature above which the cellulose ether precipitates out of solution). Cellulose ethers that are soluble in hot and cold water, such as carboxymethyl or hydroxyethyl cellulose, can be separated from the reaction byproducts by extraction of the byproducts with an aqueous alcohol mixture, in which the reaction byproducts are soluble and the cellulose ether is insoluble.

Following washing of the crude cellulose ether product, the washing media will contain the reaction byproducts, typically the inorganic salts, and the hydrolysis products of the etherifying agents. In addition to these byproducts, in most cases, unfortunately, a fraction of the cellulose ether product, most probably a low molecular weight fraction of the cellulose ether, is solvated in the wash media. This loss of product in the wash media is most likely to occur in the case of cold water soluble cellulose ethers, such as methyl, methylhydroxyethyl, methylhydroxypropyl, or hydroxypropyl cellulose. This solvated fraction of the cellulose ether product results in a yield loss. In addition, since the wash media is typically sent to a waste treatment facility, where the organic components are biodegraded, the inclusion of cellulose ethers in the wash media adds to the chemical oxygen demand (COD) load on the treatment facility. Additionally, cellulose ethers are not easily attacked and broken down by bacteria, i.e. are poorly biodegradable, which can result in difficulties and high costs in the waste treatment facility. Processes are therefore explored that would allow for the separation of soluble cellulose ethers from the washing media of the crude cellulose ether product. Such a process must also allow for the purification of the separated cellulose ether, so that the byproducts from the reaction are also substantially separated from the cellulose ether product.

Due to the potential loss of product as well as the difficulties encountered in waste treatment of the wash media from washing crude cellulose ethers, it would be advantageous to provide a process to separate and purify the soluble cellulose ethers from the washing media in an efficient and cost effective manner. A number of methods have been employed in an effort to separate and purify soluble cellulose ethers from the wash media of the crude cellulose ether product. Some of these methods employ chemical treatments, followed by mechanical separation, while others use purely mechanical separation techniques.

For example, US 4 537 958 and JP-OS-28/68190 describe processes to render water-soluble cellulose ethers, contained in the wash medium from the washing of crude cellulose ether products, insoluble. US 4 537 958 comprises mixing the water-soluble cellulose ether solution with a dialdehyde under acidic conditions, thereby rendering the cellulose ether insoluble due to crosslinking, while JP-OS-28/68190 comprises reacting the water soluble cellulose ether with phenolic compounds, which act as a flocculating agent to precipitate the cellulose ether. The insoluble cellulose ether compound can be recovered by standard filtration or centrifugation. While the wash medium contains substantially less soluble cellulose following such treatments, the compounds added to the wash medium to render the cellulose ether insoluble remain in the wash medium, and must be dealt with in a subsequent process. In addition, the precipitated cellulose ethers have been modified via reaction with the added compounds, and may not be suitable for mixing with the main cellulose ether products.

US Patent No. 4 672 113 describes ultrafiltration processes to purify the liquid reaction and/or washing medium obtained during the preparation of cellulose ethers. A process is described in which the liquid medium is subjected to a distillation to separate the low-boiling organic byproducts of the reaction, followed by ultrafiltration of the aqueous distillation residue through, preferably, a polyether sulphone membrane to produce a permeate which has a reduced COD value and a concentrate that contains approximately equal amounts of cellulose ether and inorganic salt. The cellulose ether concentration in the concentrate stream is low and will require further processing to avoid the disposal of a large quantity of concentrate. The flux rates through the membrane are also low, thereby demanding a high membrane area. In addition, the concentrate will still contain the inorganic salt byproduct from the cellulose ether reaction, thereby requiring further processing of this stream in order to recover a pure cellulose ether product.

In order to improve on some of the deficiencies of the process disclosed in US Patent No. 4 672 113, US Patent No. 5 500 124 teaches a process comprising the purification of the liquid reaction and/or washing medium obtained during the preparation of cellulose ethers. The process involves the ultrafiltration of said medium at a temperature above the flocculation temperature of the cellulose ether. The ultrafiltration is carried out, again preferably, using a polyether sulphone membrane. The concentrate of the reaction and/or wash medium obtained from the ultrafiltration process still contains the inorganic salt byproduct, and is further treated with an oxidizing agent such that the dissolved cellulose ether is oxidatively degraded.

US Patent No. 5 218 107 describes a process of removing water-soluble impurities (primarily inorganic salt) from a water-soluble cellulose ether aqueous solution which comprises treating the water-soluble cellulose ether aqueous solution by means of ultrafiltration and diafiltration at conditions effective to produce a treated aqueous solution having a reduced concentration of the water-soluble impurity, and an increased concentration of the water-soluble cellulose ether. The flux rates claimed through the membrane, 3-20 l/m2/hr, are low which would result in high membrane area and an inefficient process. Furthermore, this patent teaches that for cellulose ethers which are less soluble at high temperatures, the temperature of this process may be increased to insolubilize such cellulose ethers.

US 5,360,902 describes a process to recover short-chain cellulose ethers that are soluble in the wash water, which is produced by rinsing methyl hydroxyalkyl cellulose ethers with water. The short-chain cellulose ethers are recovered by means of passing the wash water across two stages of membrane filtration. In order to obtain reasonable flux rates through the membrane, however, the membrane molecular weight cutoff is such that only cellulose ethers of a molecular weight greater than 8000 Dalton will be recovered, while smaller-chain (less than 8000 Dalton) species will not be recovered. When using the 8000 Dalton membrane, approximately 5 % of the soluble material is not recovered. To recover these smaller-chain cellulose ethers, a lower molecular weight cut off, 500 Dalton, membrane was used. The flux rates of 5-10 l/m²/hr claimed in order to recover all, or nearly all of the soluble cellulose ethers, would result in high membrane area and an inefficient process. An attempt to increase the flux rate by increasing pressure was unsuccessful (the flux rate decreased when the pressure was increased), presumably due to the fouling of the polyether sulfone membrane.

US Patent No. 5 482 634 describes a process to purify an aqueous reaction and/or washing medium, which contains cellulose ethers. The process comprises heating the aqueous medium above the flocculation point of the hot-water soluble cellulose ethers and separating the precipitated gels using a solid-bowl centrifuge or disk separator, followed by treating the aqueous liquor by ultrafiltration through preferably a polyethersulphone membrane to a concentration ratio of at least 40. The initial heating of the aqueous medium serves the purpose to remove the gels prior to the ultrafiltration treatment, presumably to allow for higher flux rates through the membrane. It would be advantageous to be able to perform the ultrafiltration treatment at reasonable flux rates through the membrane without the added complexity of the high temperature centrifugation or disk separation.

In view of this prior art, the underlying object of the present invention is to provide a more effective and efficient process for recovering cellulose ethers from an aqueous solution, in particular from the washing medium obtained in the purification of crude cellulose ether products.

This object is solved according to the present invention by a process for recovering cellulose ethers from an aqueous solution, comprising the steps of:
(a) passing the aqueous solution through an ultrafiltration membrane apparatus creating enhanced shear at the surface of the ultrafiltration membrane at a temperature below the flocculation temperature of the cellulose ether;
(b) diluting the retentate obtained in step (a) with a solvent in a volume ratio of solvent to retentate in the range of 1:1 to 40:1; and
(c) passing the diluted retentate obtained in step (b) through an ultrafiltration membrane apparatus creating enhanced shear at the surface of the ultrafiltration membrane at a temperature below the flocculation temperature of the cellulose ether,
   wherein the molecular weight cutoff rating of the membrane in the ultrafiltration membrane apparatus of step (a) and/or step (c) is between 100 and 10000 Dalton, and
   wherein the average permeate flux in step (a) and/or step (c) is between 10 and 100 l/m²h.

The aqueous solution containing cellulose ethers will be described which are to be subjected to the process of this invention.

Cellulose ethers are polymers that provide rheology control to water-based systems. They are prepared via the alkylation of cellulose via the reaction with an alkali hydroxide, such as sodium hydroxide, and a suitable etherifying agent, such as monochloroacetic acid, ethylene or propylene oxide, methyl or ethyl chloride, etc. For example, carboxymethyl cellulose can be prepared via the reaction of cellulose with sodium hydroxide and monochloroacetic acid, while methyl cellulose can be prepared via the reaction of cellulose with sodium hydroxide and methyl chloride. Mixed esters of methyl cellulose, such as methylhydroxyethyl or methylhydroxypropyl cellulose, can be prepared by the addition to the methyl cellulose reaction medium of ethylene or propylene oxide.

The cellulose ether to be recovered by the process of the present invention is preferably a cellulose ether having a lower solubility in hot water than in cold water. The process is particularly preferred for recovering methyl cellulose, methylhydroxyethyl cellulose, methylhydroxypropyl cellulose and hydroxypropyl cellulose.

The aqueous solution containing cellulose ethers used in the process of the present invention is preferably the washing medium obtained in the purification of crude cellulose ethers which is obtained as waste in the preparation of cellulose ethers.

The alkylation and etherification reactions of cellulose also lead to the formation of reaction byproducts, such as salts and hydrolysis products of the various etherifying agents. These byproducts may include salts such as, for example sodium chloride, and/or sodium acetate, and hydrolysis byproducts such as, for example ethylene or propylene glycol, and/or methanol. The mixture of the cellulose ether product and the above-described byproducts is herein referred to as the "crude cellulose ether product". In most cases, the byproducts need to be separated from the crude cellulose ether product to produce a purified cellulose ether. The purification of the crude cellulose ether product is usually accomplished by washing with hot water and/or a hot aqueous alcohol solution, however any number of organic or aqueous solutions can be used as long as they are effective in solubilizing the byproducts of the cellulose ether reaction. The washing of the crude cellulose ether product with water or an aqueous alcohol solution removes the reaction byproducts into the washing medium. However in many cases, depending on the particular cellulose ether that is being produced, it also solubilizes a fraction of the cellulose ether. The solubilized cellulose ether most likely comprises the fraction of the crude cellulose ether product which is either of a low molecular weight or which has a degree of etherification which renders it soluble in the washing liquid. Different cellulose ethers have varying solubilities in the washing liquid, depending on the temperature or the particular washing liquid employed. The washing liquid obtained from the washing of the crude cellulose ether product, which contains byproducts of the reaction, as well as any soluble cellulose ether product (or for that matter any insoluble cellulose ether product that is passed into the wash liquid) is termed the "wash medium". Typically, the wash medium will have a concentration of 0.5 to 20 g/l cellulose ether and 50 to 150 g/l of salts; more typically the cellulose ether concentration will be between 2 and 10 g/l, and the salt concentration will be between 70 and 100 g/l. The other reaction byproducts will typically have a concentration of less than 1 g/l in the wash medium. The washing medium, without the use of the present invention, would typically be sent to a waste treatment facility. The cellulose ether that is contained in the wash medium is thereby lost. In addition, the soluble cellulose ether typically is poorly biodegradable and greatly increases the COD load on the waste treatment facility in comparison to a wash medium where the soluble cellulose ether is removed.

In step (a) of the process of the invention, the aqueous solution containing cellulose ethers is passed through an ultrafiltration membrane apparatus creating enhanced shear at the surface of the ultrafiltration membrane at a temperature below the flocculation temperature of the cellulose ether. That is, the aqueous solution is subjected to ultrafiltration.

Ultrafiltration is a membrane separation process that occurs at the molecular level, and is driven by a pressure difference across the membrane. Membranes are thin solid barriers that have a defined pore structure that allow a separation to be accomplished due to a size exclusion mechanism. Membrane separation processes are desirable, in comparison to other separation processes such as distillation or complexation, due to the fact that membrane separation does not chemically alter or destroy the products to be separated; therefore the separated component can conceivably be recycled and reused. Liquids and components that are smaller than the pores of the membrane pass through the membrane, while larger components do not pass through the membrane and are retained. The stream that contains the retained components is known as the concentrate or retentate, while the stream that is passed through the membrane is known as the filtrate or permeate. The rate at which the permeate passes through the membrane is known as the membrane throughput. It is typical for this membrane throughput to be referenced to the area of the membrane. The throughput on an area basis is termed the membrane flux. The objective of an ultrafiltration process is to either recover or concentrate certain components in a stream and/or to remove components from a stream, thereby producing a purified permeate stream.

The use of membrane filtration is often limited as a viable, production scale separation process due to low membrane fluxes, therefore high capital costs, as well as fouling of the membrane surface. Fouling results in the long-term loss of membrane flux and can be caused by either a buildup of components on the membrane surface leading to a film layer being formed, or by the accumulation of components in the membrane pores, leading to pore plugging. As a result, frequent cleaning of the membrane is required, which can cause degradation and accelerates membrane replacement, thereby increasing the cost of the membrane filtration in use.

Typically, one method employed to minimize the thickness of the foulant layer, and thereby increase membrane flux, is to produce shear at the membrane surface by crossflow filtration. In crossflow filtration, the feed stream is pumped across the membrane, parallel to the surface, at a high velocity. However, the high velocities effectively limit crossflow filtration to low viscosity streams and therefore low overall concentration of the retained component. Although crossflow filtration decreases the buildup of a foulant film layer, it does not eliminate it. This is due to the fact that the shear rates produced by crossflow filtration, typically of less than 20000 s⁻¹, are not sufficient to create turbulence at the membrane surface, therefore a buildup of a stagnant layer of the retained components still takes place, with a corresponding deterioration in the membrane flux.

According to the present invention, enhanced shear is created at the surface of the ultrafiltration membrane by an ultrafiltration membrane apparatus. The term "enhanced shear" is taken to mean, in the context of the present invention, shear that is independent of the crossflow velocity of the feed stream. The enhanced shear created by the ultrafiltration membrane apparatus may be created by vibration, spinning discs, or spinning cylinders, and it is preferably one corresponding to a shear rate of greater than 100000 s⁻¹, preferably greater than 130000 s⁻¹.

The creation of shear by vibration is preferred, i.e. the ultrafiltration membrane apparatus to be used in the present invention is preferably a vibrating ultrafiltration membrane apparatus. In a vibrating ultrafiltration apparatus, the membrane is vibrated at a specific frequency and a specific amplitude. The shear created by the apparatus can be adjusted by controlling the frequency and the amplitude. Typical values for the frequency are in the range of 40 to 80 Hz, and typical values for the amplitude are in the range of 1 to 4 cm (0.5 to 1.5 inches).

A particularly preferred ultrafiltration membrane apparatus is termed VSEP, for vibratory shear enhanced process, manufactured by New Logic International Inc. of Emeryville, California. VSEP is a plate and frame system where the membranes themselves create shear at the membrane surface through torsional vibration. The vibration produces shear waves that cause turbulence at the membrane surface. The shear rates produced can reach as high as -150000 s⁻¹, which is up to 5 times higher than in typical crossflow filtration. This increase in shear essentially eliminates the stagnant film layer at the membrane surface and allows for higher membrane flux for a similar membrane as compared to crossflow membrane filtration. Alternatively, the opportunity exists for the use of tighter, i.e. smaller pore size, membranes so as to improve the retention efficiency of the filtration.

In the ultrafiltration achieved in step (a) of the process of the present invention, the aqueous solution is kept below the flocculation temperature of the cellulose ether. The term flocculation temperature is known to those skilled in the art and is defined as the temperature above which a cellulose ether will precipitate out of solution. It depends on the degree of substitution primarily and on the molecular weight secondarily. According to the present invention, a standard method is used for determining the flocculation point of the cellulose ether constituting the main product. The cellulose ether contained in the washing media to be purified has the same or, in case it has a lower molecular weight, a higher flocculation point, but generally not a lower flocculation point than in the determined for the main product. Hence, the lowest possible flocculation point of the cellulose ether contained in the washing media is known when carrying out the process of the present invention.

It was surprisingly found that by avoiding precipitation of the cellulose ether and simultaneously creating enhanced shear at the surface of the membrane, the membrane flux is maximized. The temperature of the aqueous solution is preferably adjusted such that it is just below the flocculation point. This is preferred since by further lowering the temperature, the viscosity of the solution increases and membrane flux is unnecessarily reduced. The temperature of the aqueous solution may be adjusted by a means for controlling the temperature of the process which also allows the temperature to be changed and adjusted in the course of step (a).

The ultrafiltration membrane used in step (a) may be an asymmetric or symmetric membrane, a composite membrane having more than one layer, or a membrane having only one layer. It may be made of ceramic or polymeric material, such as polystyrene, polyester, polyamide, polysulfones, polyethersulfones, or cellulose acetate. Preferred membranes are a polysulfone, polyethersulfone, or polyamide membrane, the polyamide membrane being particularly preferred. An example of a polyamide membrane which may be preferably used according to the present invention includes TS-40 from Trisep Corporation, Goleta, California, USA. This membrane preferably has a molecular weight cutoff which will allow for high retention of the cellulose ether, while also providing for a high membrane flux due to enhanced shear. The molecular weight cutoff rating (a measure of the pore size) is preferably between 100 and 10000 Dalton, more preferably between 150 and 2000 Dalton. The exact value of the cutoff rating depends on the molecular weight of the cellulose ether to be recovered and is appropriately selected.

As noted above, the temperature should be kept below the flocculation temperature of the cellulose ethers, typically below 80°C, preferably below 65°C.

The operating pressure is preferably between 2 and 40 bar, more preferably 10 and 30 bar. The pressure on the retentate side is preferably higher than on the permeate side and is preferably raised in correlation with the permeate flux. The pressure on the permeate side is generally atmospheric pressure.

The average permeate flux in step (a) is preferably between 10 and 100 l/m²h.

In step (b) of the process of the present invention, the retentate obtained in step (a) is diluted with a solvent in a volume ratio of solvent to retentate in the range of 1:1 to 40:1, preferably in the range of 1:1 to 20:1, more preferably in the range of 2:1 to 10:1. The retentate stream of step (a) is mixed either continuously or batch-wise with the volume of water added in step (b). Any solvent may be used according to the present invention, provided that it dissolves the cellulose ether and the salt and is compatible with the membrane. For a polyamide membrane, water, aliphatic hydrocarbon, aromatic hydrocarbon, alcohols, ethers and ketones are suitable. For polysulphone membranes, water and alcohols are compatible. The use of water as a solvent is preferred.

In a preferred embodiment, step (b) is carried out simultaneously with step (c). That is, the quantity of solvent added in step (b) is simultaneously mixed with the retentate obtained in step (a) in a tank, the contents of which are then passed through the ultrafiltration membrane apparatus creating enhanced shear at a temperature below the flocculation temperature of the cellulose ether in step (c).

The permeate from step (c) is discarded, while the retentate is recycled to the tank where it is continuously diluted with solvent. The flow of solvent is preferably set equal to the permeate flow obtained in step (c). This process is continued until the concentration of salt in the retentate flow obtained in step (c) is reduced to a desired level. At that point, the tank is emptied and a new batch of retentate from step (a) is brought into the tank and the process is repeated.

The combination of steps (b) and (c) is a diafiltration step. Diafiltration is a process where a solute, typically water, is injected into a system at a rate equal or less than the filtration rate being used on the system. The net effect is to wash out the soluble components that will pass through the membrane while retaining the components that will not pass through the membrane.

In the present invention, water is preferably added as a solvent to wash out salt and other water-soluble impurities by diafiltration. During diafiltration, the solvent addition rate is preferably set substantially equal to the rate of loss of permeate through the membrane so that diafiltration is done independently of concentration of the cellulose ether in the aqueous solution. Diafiltration is generally most efficient when the volume of retentate of cellulose ether is lowest.

With regard to the ultrafiltration membrane apparatus to be used, the process conditions such as temperature, pressure and flux, and the membranes to be used, the same conditions and materials may be adopted in step (c) as in step (a).

That is, the ultrafiltration of step (c) is carried out using preferably a polyamide membrane, such as TS-40. As described above, other membranes are also suitable. The membrane is preferably installed into a vibrating apparatus such as an enhanced shear module, e.g. the VSEP system, described previously. The polyamide membrane should preferably have a molecular weight cutoff rating (a measure of the pore size) between 100 and 10000 Dalton, more preferably between 150 and 2000 Dalton. The temperature should be kept below the flocculation temperature of the cellulose ethers, typically below 80°C, preferably below 65°C, while the operating pressure is typically between 2 and 40 bar, preferably between 20 and 30 bar.

At the end of step (c), the cellulose ether will have a concentration in the concentrate stream of between 50 and 5000 g/l, typically between 150 and 400 g/l, and a salt concentration of between 2 and 30 g/l, typically 5 and 20 g/l.

The steps (a) to (c) of the present invention can be done either batch-wise or as a continuous process. Additionally, steps (a) and (c) may be performed in any combination, that is step (a) may be carried out to an intermediate concentration, followed by steps (b) and (c), followed by another step (a), again steps (b) and (c), etc. It is particularly preferred to repeat steps (b) and (c) various times, preferably 2 to 5 times.

The permeate streams from both step (a) and step (c) are clear liquids and are substantially reduced in cellulose ether. It has been found that practicing the process of the present invention produces a permeate stream, in many cases, with no detectable levels of cellulose ether. The permeate streams can be sent on to a waste treatment facility. Since the retained cellulose ethers are more difficult to attack biologically than the organic components remaining in the permeate streams, the permeate streams will be more easily biodegradable.

The concentrate stream obtained in step (c) will be of a high concentration of cellulose ether and substantially free of impurities such as salt. The overall recovery of the cellulose ether in the washing medium is generally between 65 and 100%, and typically between 80 and 95%. This stream can be recovered as a valuable product or sent on for further processing, such as drying, preferably spray drying, grinding etc. to recover a solid product, preferably in dry particulate form. Alternatively, the concentrate solution can be recycled into the drying process of the main cellulose ether product (that product which was recovered via standard filtration techniques from the crude cellulose ether product).

As will be appreciated by the following examples, the process of the present invention is very efficient and effective as it provides a good retention of cellulose ether at high membrane fluxes.

The process of the present invention is further illustrated by the following examples, which should not be read in such way as to limit the scope of the present invention. The washwater that is employed in the following examples contains soluble, low molecular weight cellulose ethers and is obtained by the washing of a crude cellulose ether product.

### EXAMPLE 1

A total of 2500 liters of a washwater from the preparation of methylhydroxethyl cellulose, which contains 6.9 g/l of cellulose ether (number average molecular weight of approx. 12000) and 85 g/l of sodium chloride, is concentrated by ultrafiltration using an enhanced shear ultrafiltration system. A VSEP series P enhanced shear ultrafiltration system manufactured by New Logic International Incorporated, fitted with ∼1.5 m² of a polyamide membrane, TS-40 (molecular weight cutoff of approx.180 Dalton), available from Trisep Corporation is used. The enhanced shear is obtained by the vibration of the membrane pack. The amplitude and frequency of the vibration are set at 2 cm, and approx. 45 Hz, respectively, and are held constant throughout the ultrafiltration. The ultrafiltration is done in a batch mode, with the washwater held at a temperature of approx. 60°C, which is below the flocculation temperature of the cellulose ether. An initial permeate flux of 60 l/m²h is obtained at an operating pressure of 20 bar. A total permeate of 2014 liters was passed through the membrane, while the retentate totals 486 liters, for a total concentration of 5.14 times. The permeate flux at the end of the concentration had decreased to 37 l/m²h. The average permeate flux was 50 l/m²h. The permeate was found to contain 0.10 g/l of cellulose ether. The retentate concentration is 35 g/l of cellulose ether. The retention of the cellulose ether by the TS-40 polyamide membrane in this concentration thus corresponds to 98.8 %.

### EXAMPLE 2

The concentrated washwater from Example 1 is diafiltered to reduce the sodium chloride concentration. The diafiltration is done in a batch mode by stepwise addition of water to the retentate, followed by concentration using the VSEP system. 514 liters of water are added to the retentate from Example 1, and then concentrated. The initial permeate rate was 72 l/m²h at 20 bar operating pressure and 55-60°C. A total of 750 liters of permeate are passed through the membrane, while the retentate totals 250 liters. The permeate flux at the end of this concentration was 51 l/m²h, with an average permeate flux was 61 l/m²h. The cellulose ether concentration in the permeate is found to be 0.14 g/l.

The diafiltration is continued by the addition of 250 liters of water to the above retentate, followed by further concentration. The initial permeate flux is 53 l/m²h. A total of 375 liters of permeate are passed through the membrane, with the retentate totaling 125 liters. The permeate flux at the end of the concentration was 21 l/m²h, with an average permeate flux of 28 l/m²h. The concentration of the cellulose ether in the permeate is found to be 0.10 g/l.

The final diafiltration stage is accomplished by the addition of 125 liters of water to the retentate from the last diafiltration stage, followed by concentration. The initial permeate flux in this final diafiltration stage is 48 l/m²h. A total of 231 liters of permeate were passed through the membrane, with the retentate totaling 69 liters. The permeate flux through the membrane at the end of the concentration was 10 l/m²h, with an average permeate flux of 23 l/m²h. The cellulose ether concentration in the permeate was found to be 0.10 g/l.

The sodium chloride concentration in the washwater was reduced from 85 g/l to 8.4 g/l. The overall retention of the cellulose ether by the TS-40 polyamide membrane in the above stepwise diafiltration is 99.0 %.The final retentate cellulose ether concentration is 245 g/l, while the overall average permeate flux for the diafiltration is 38 l/m²h.

### EXAMPLE 3

A total of 2250 liters of a washwater from the preparation of methylhydroxpropyl cellulose, which contains 4.3 g/l of cellulose ether (number average molecular weight of approx. 8000), is concentrated by ultrafiltration using the VSEP series P enhanced shear ultrafiltration system. To determine the effect of the membrane pore size on the retention of the cellulose ether, the VSEP is fitted with approx. 1.5 m² of NTR 7410 polyethersulfone membrane, molecular weight cutoff of 1000 Dalton, available from Hydronautics Corporation, Oceanside, California. The vibration amplitude is set at 1.8 cm [¾ inch], and is held constant throughout the ultrafiltration. The ultrafiltration is done in a batch mode, with the washwater held at a temperature of approx. 60°C, which is below the flocculation temperature of the cellulose ether. An initial permeate flux of 31 l/m²h is obtained at an operating pressure of 10 bar. When the washwater reached a concentration factor of 2.7 times, the permeate flux had decreased to 23 l/m²h. The operating pressure was increased to 14 bar, and the permeate flux increased to 38 l/m²h. When the washwater reached a concentration factor of 4.4 times, the permeate flux had decreased to 36 l/m²h. The operating pressure was increased to 17 bar, and the permeate flux increased to 43 l/m²h. When the washwater reached a concentration factor of 12 times, the permeate flux had decreased to 34 l/m²h. The operating pressure was increased to 24 bar, and the permeate flux increased to 44 l/m²h. The washwater was further concentrated to a total concentration factor of 15 times. The permeate flux at the end of the concentration was 37 l/m²h. In total 2100 liters of permeate were passed through the membrane. The retentate concentration was found to be 58 g/l of cellulose ether. The retention of the cellulose ether by the NTR 7410 polysulfone membrane in this concentration thus corresponds to 90 %.

### EXAMPLE 4

The 150 liters of concentrate Example 3 is diafiltered to reduce the sodium chloride concentration and further concentrated. The sodium chloride concentration of the concentrate is 84 g/l. The diafiltration is conducted in a batch mode by the one time addition of dilution water to the concentrated washwater. The diluted concentrate is then fed to the VSEP series P system fitted with the NTR 7410 polysulfone membrane. 604 liters of water are added to the 150 liters of concentrate of Example 3. The diafiltration is carried out at approx. 60°C, and 20 bar operating pressure. At the start of diafiltration, the permeate flux was 36 l/m²h. A total of 700 liters were passed through the membrane, with the retentate totaling 54 liters. The final concentration of the retentate was found to be 139 g/l, with a sodium chloride concentration of 16 g/l. The permeate flux had decreased to 32 l/m²h at this final concentration. The retention of the cellulose ether was 86 %.

### EXAMPLE 5

A washwater from the preparation of methylhydroxyethyl cellulose, which contains 5.6 g/l of cellulose ether is concentrated by ultrafiltration using a VSEP series L enhanced shear ultrafiltration system, both with and without vibration. The VSEP series L unit is fitted with 0.045 m² of TS-40 polyamide membrane. The concentrations are done in a batch mode at approx. 55°C, which is below the flocculation temperature of the cellulose ether, and at an operating pressure of 14 bar.

In the non-vibration mode of operation, shear is provided by the flow of the retentate over the membrane surface. The crossflow velocity is set at a value of 0.7 m/s. At the start of the ultrafiltration, the permeate flux is 41 l/m²h, however it quickly drops to 22 l/m²h at a concentration of 10 g/l of cellulose ether, and then further declines to 5 l/m²h at a concentration of 40 g/l of cellulose ether.

The same washwater as used above is similarly concentrated, however, shear is primarily induced by vibration of the membrane pack. The frequency and amplitude of the vibration is set at 2 cm and 45 Hz, respectively. The crossflow velocity of the retentate is 0.1 m/s. The permeate flux at the start of the ultrafiltration is 65 l/m²h, and decreases at 47 l/m²h at a concentration of 40 g/l cellulose ether.

### EXAMPLE 6

A washwater from the preparation of methylhydroxethyl cellulose, which contains 9.1 g/l of cellulose ether (with a number average molecular weight of 3300), is concentrated by ultrafiltration in a batch mode using the VSEP series L enhanced shear ultrafiltration system. The system is fitted with the NTR 74210 polysulfone membrane. Two concentration runs are done. The washwater is concentrated both at approx. 55°C, which is below the flocculation temperature of the cellulose ether, and at 80°C, which is above the flocculation point of the cellulose ether. The operating pressure in both cases is set at 20 bar. At the start of the concentrations, the permeate flux is 100 l/m²h and 143 l/m²h at 55°C and 80°C, respectively. At a concentration factor of approx. 3 times, the permeate flux is approx. 90 l/m²h for each temperature. At a concentration factor of approx. 9 times, the permeate flux is 70 l/m²h for the 55°C run (below the flocculation temperature of the cellulose ether), while only 30 l/m²h for the 80°C run (above the flocculation temperature of the cellulose ether).

## Claims

1. A process for recovering cellulose ethers from an aqueous solution, comprising the steps of:
(a) passing the aqueous solution through an ultrafiltration membrane apparatus creating enhanced shear at the surface of the ultrafiltration membrane at a temperature below the flocculation temperature of the cellulose ether;
(b) diluting the retentate obtained in step (a) with a solvent in a volume ratio of solvent to retentate in the range of 1:1 to 40:1; and
(c) passing the diluted retentate obtained in step (b) through an ultrafiltration membrane apparatus creating enhanced shear at the surface of the ultrafiltration membrane at a temperature below the flocculation temperature of the cellulose ether,
wherein the molecular weight cutoff rating of the membrane in the ultrafiltration membrane apparatus of step (a) and/or step (c) is between 100 and 10000 Dalton, and
wherein the average permeate flux in step (a) and/or step (c) is between 10 and 100 lm²h.

2. The process according to claim 1, wherein the ultrafiltration membrane apparatus in step (a) and/or step (c) is a vibrating ultrafiltration membrane apparatus.

3. The process according to any of claim 1 or 2,
wherein the ultrafiltration membrane apparatus in step (a) and/or step (c) comprises a membrane comprising polyamide.

4. The process according to any of the preceding claims, wherein the cellulose ether is a cellulose ether having a lower solubility in hot water than in cold water.

5. The process according to claim 4, wherein the cellulose ether is selected from methyl cellulose, methylhydroxyethyl cellulose, ethylhydroxyethyl cellulose, methylhydroxypropyl cellulose, and hydroxypropyl cellulose.

6. The process according to any of the preceding claims, wherein steps (b) and (c) are carried out simultaneously.

7. The process according to any of the preceding claims, further comprising drying the retentate obtained in step (c) to recover the cellulose ether in dry particulate form.

8. The process according to any of the preceding claims, wherein the operating pressure is between 2 and 40 bar.

9. The process according to any of the preceding claims, wherein the temperature in steps (a) and (c) is below 80°C.

10. The process according to any of the preceding claims, wherein the aqueous solution is the washing medium obtained in the purification of crude cellulose ethers.

11. The process according to claim 10, wherein the concentration of the cellulose ether in the aqueous solution is in the range of 0.5 to 20 g/l prior to step (a).

12. The process according to any of claims 10 or 11, wherein the aqueous solution contains salt in a concentration of 50 to 150 g/l prior to step (a).

13. The process according to any of the preceding claims, wherein steps (b) and (c) are repeatedly carried out.

14. The process according to any of the preceding claims, wherein the retentate from step (c) is recycled to step (b), and the solvent addition rate to step (b) is adjusted to be equal to the permeate rate of step (c).

## Patentansprüche

1. Verfahren zur Rückgewinnung von Celluloseethern aus einer wässrigen Lösung, umfassend die Schritte:
(a) Leiten einer wässrigen Lösung durch eine Ultrafiltrationsmembranvorrichtung, die eine erhöhte Scherkraft an der Oberfläche der Ultrafiltrationsmembran bewirkt, bei einer Temperatur unter der Ausflockungstemperatur des Celluloseethers;
(b) Verdünnen des in Schritt (a) erhaltenen Retentats mit einem Lösungsmittel in einem Volumenverhältnis von Lösungsmittel zu Retentat im Bereich von 1:1 bis 40:1; und
(c) Leiten des in Schritt (b) erhaltenen verdünnten Retentats durch eine Ultrafiltrationsmembranvorrichtung, die eine erhöhte Scherkraft an der Oberfläche der Ultrafiltrationsmembran bewirkt, bei einer Temperatur unter der Ausflockungstemperatur des Celluloseethers,
wobei die Durchlassgrenze bezüglich des Molekulargewichts der Membran in der Ultrafiltrationsmembranvorrichtung in Schritt (a) und/oder Schritt (b) zwischen 100 und 10.000 Dalton liegt, und
wobei der durchschnittliche Permeatfluss in Schritt (a) und/oder Schritt (c) zwischen 10 und 100 ℓ/m²h liegt.

2. Verfahren nach Anspruch 1, wobei die Ultrafiltrationsmembranvorrichtung in Schritt (a) und/oder Schritt (c) eine vibrierende Ultrafiltrationsmembranvorrichtung ist.

3. Verfahren nach einem der Ansprüche 1 oder 2, wobei die Ultrafiltrationsmembranvorrichtung in Schritt (a) und/oder Schritt (c) eine Membran, umfassend Polyamid, umfasst.

4. Verfahren nach einem der vorhergehenden Ansprüche, wobei der Celluloseether ein Celluloseether mit einer geringeren Löslichkeit in heissem Wasser als in kaltem Wasser ist.

5. Verfahren nach Anspruch 4, wobei der Celluloseether ausgewählt wird aus Methylcellulose, Methylhydroxyethylcellulose, Ethylhydroxyethylcellulose, Methylhydroxypropylcellulose und Hydroxypropylcellulose.

6. Verfahren nach einem der vorhergehenden Ansprüche, wobei die Schritte (b) und (c) gleichzeitig durchgeführt werden.

7. Verfahren nach einem der vorhergehenden Ansprüche, weiterhin umfassend das Trocknen des in Schritt (c) erhaltenen Retentats, um den Celluloseether in trockener partikulärer Form zurückzugewinnen.

8. Verfahren nach einem der vorhergehenden Ansprüche, wobei der Betriebsdruck zwischen 2 und 40 bar beträgt.

9. Verfahren nach einem der vorhergehenden Ansprüche, wobei die Temperatur in Schritt (a) und (c) unter 80°C liegt.

10. Verfahren nach einem der vorhergehenden Ansprüche, wobei die wässrige Lösung das Waschmedium ist, das bei der Reinigung von Rohcelluloseethern erhalten wird.

11. Verfahren nach Anspruch 10, wobei die Konzentration des Celluloseethers in der wässrigen Lösung im Bereich von 0,5 bis 20 g/ℓ vor dem Schritt (a) beträgt.

12. Verfahren nach einem der Ansprüche 10 oder 11, wobei die wässrige Lösung Salz in einer Konzentration von 50 bis 150 g/ℓ vor dem Schritt (a) enthält.

13. Verfahren nach einem der vorhergehenden Ansprüche, wobei die Schritte (b) und (c) wiederholt durchgeführt werden.

14. Verfahren nach einem der vorhergehenden Ansprüche, wobei das Retentat aus Schritt (c) zu Schritt (b) rückgeführt wird, und die Lösungsmittelzugaberate zu Schritt (b) so eingestellt wird, dass sie gleich der Permeatrate von Schritt (c) ist.

## Revendications

1. Procédé de récupération d'éthers de cellulose à partir d'une solution aqueuse, comprenant les étapes de :
(a) passage de la solution aqueuse à travers un appareil à membrane d'ultrafiltration en créant un cisaillement accru à la surface de la membrane d'ultrafiltration à une température inférieure à la température de floculation de l'éther de cellulose ;
(b) dilution du rétentat obtenu dans l'étape (a) avec un solvant dans un rapport en volume du solvant au rétentat dans la plage de 1:1 à 40:1 ; et
(c) passage du rétentat dilué obtenu dans l'étape (b) à travers un appareil à membrane d'ultrafiltration en créant un cisaillement accru à la surface de la membrane d'ultrafiltration à une température inférieure à la température de floculation de l'éther de cellulose,
dans lequel la valeur limite de poids moléculaire de la membrane dans l'appareil à membrane d'ultrafiltration de l'étape (a) et/ou de l'étape (c) est entre 100 et 10000 Daltons, et
dans lequel le flux du perméat moyen dans l'étape (a) et/ou l'étape (c) est entre 10 et 100 1/m²h.

2. Procédé selon la revendication 1, dans lequel l'appareil à membrane d'ultrafiltration dans l'étape (a) et/ou l'étape (c) est un appareil à membrane d'ultrafiltration à vibrations.

3. Procédé selon l'une quelconque des revendications 1 ou 2, dans lequel l'appareil à membrane d'ultrafiltration dans l'étape (a) et/ou l'étape (c) comprend une membrane comprenant du polyamide.

4. Procédé selon l'une quelconque des revendications précédentes, dans lequel l'éther de cellulose est un éther de cellulose ayant une solubilité dans l'eau chaude inférieure à celle dans l'eau froide.

5. Procédé selon la revendication 4, dans lequel l'éther de cellulose est choisi parmi la méthylcellulose, la méthylhydroxyéthylcellulose, l'éthylhydroxyéthylcellulose, la méthylhydroxypropylcellulose et l'hydroxypropylcellulose.

6. Procédé selon l'une quelconque des revendications précédentes, dans lequel les étapes (b) et (c) sont effectuées simultanément.

7. Procédé selon l'une quelconque des revendications précédentes, comprenant en plus le séchage du rétentat obtenu dans l'étape (c) pour récupérer l'éther de cellulose sous forme de particules sèches.

8. Procédé selon l'une quelconque des revendications précédentes, dans lequel la pression de fonctionnement est entre 2.10⁵ et 40.10⁵ Pa (2 à 40 bars).

9. Procédé selon l'une quelconque des revendications précédentes, dans lequel la température dans les étapes (a) et (c) est inférieure à 80°C.

10. Procédé selon l'une quelconque des revendications précédentes, dans lequel la solution aqueuse est le milieu de lavage obtenu dans la purification d'éthers de cellulose bruts.

11. Procédé selon la revendication 10, dans lequel la concentration de l'éther de cellulose dans la solution aqueuse est dans la plage de 0,5 à 20 g/l avant l'étape (a).

12. Procédé selon l'une quelconque des revendications 10 ou 11, dans lequel la solution aqueuse contient un sel dans une concentration de 50 à 150 g/l avant l'étape (a).

13. Procédé selon l'une quelconque des revendications précédentes, dans lequel les étapes (b) et (c) sont effectuées de manière répétée.

14. Procédé selon l'une quelconque des revendications précédentes, dans lequel le rétentat de l'étape (c) est recyclé à l'étape (b) et la vitesse d'addition du solvant à l'étape (b) est ajustée pour être égale à la vitesse du perméat de l'étape (c).
